# EUROPÄISCHE PATENTSCHRIFT

(11) **EP 3 434 738 B1**
(45) Veröffentlichungstag und Bekanntmachung des Hinweises auf die Patenterteilung: **02.09.2020**
(21) Anmeldenummer: 17183770.1
(22) Anmeldetag: 28.07.2017
(51) Int. Cl.: C09D 5/00

(54) **LÖSEMITTELHALTIGE FARBTONPASTE**
SOLVENT-CONTAINING COLOUR PASTE
PÂTE DE COULEUR CONTENANT DES SOLVANTS

(43) Veröffentlichungstag der Anmeldung: 30.01.2019
(73) Patentinhaber: DAW SE, 64372 Ober-Ramstadt (DE)
(72) Erfinder: PTATSCHEK, Volker, 63773 Golbach (DE); DELP, Ingo, 64401 Groß-Bieberau (DE)
(74) Vertreter: Metten, Karl-Heinz

(56) Entgegenhaltungen:
- EP-A1- 0 599 105
- WO-A1-02/096997
- WO-A1-2008/119390

## Beschreibung

Die vorliegende Erfindung betrifft eine lösemittelhaltige Farbtonpaste und ein Kit-of-parts Beschichtungssystem enthaltend diese lösemittelhaltige Farbtonpaste. Ferner betrifft die Erfindung ein abgetöntes Anstrichsystem, erhältlich aus dem erfindungsgemäßen Beschichtungssystem, sowie einen Anstrich. Außerdem betrifft die Erfindung ein Verfahren zum Abtönen einer Beschichtungsmasse sowie die Verwendung der erfindungsgemäßen lösemittelhaltigen Farbtonpaste, insbesondere Pigmentpaste, in Abtönmaschinen, insbesondere Point-of-sale-Maschinen, zum Einfärben von lösemittelhaltigen Farben, Lacken und Lasuren und für die Herstellung abgetönter Anstrichsysteme.

Farbtonpasten werden zum Abtönen vielfältiger Beschichtungsmassen eingesetzt. Auf diese Weise kann eine gewünschte Farbe in größeren Mengen für den Farbauftrag verfügbar gemacht werden. Mit dem Einsatz von Farbtonpasten geht der Vorteil einher, dass nicht eine Vielzahl an Beschichtungsmassen, beispielsweise Lacken oder Lasuren, in größeren Mengen für jede gewünschte oder verfügbare Farbe vorrätig gehalten werden müssen. Vielmehr kann hierfür auf eine einheitliche Beschichtungsmasse zurückgegriffen werden, die als Ausgangsbasis für vom Kunden gewünschte Farben dient. Diese Beschichtungsmasse ist zur Farbeinstellung mit individuellen Farbtonpasten abzutönen. Im Ergebnis sind dann nicht mehr die final eingefärbten Beschichtungsmassen als solche in größeren Mengen vorrätig zu halten, diese können relativ frisch aus einer Basisbeschichtungsmasse hergestellt und für die baldige Verwendung, d.h. Abtötung zur Verfügung gestellt werden. Anders stellt sich die Situation dann allerdings für die Farbtonpasten dar, die in Abhängigkeit von der jeweiligen Nachfrage durchaus längere Standzeiten haben können, beispielsweise in Abtönmaschinen, wie sie in Malerfachbetrieben oder auch in Baumärkten zum Einsatz kommen. Dort liegen diese Farbtonpasten dann regelmäßig in geöffneten Gebinden vor. Damit es in solchen Situationen nicht über Austrocknungsphänomene zur Hautbildung kommt, hat man bislang, wie zum Beispiel in der EP 2 243 808 A1, der WO 2008/119390 A1, der WO 02/096997 A1 oder der DE 600 09 142 T2 offenbart, als sogenanntes Hautverhütungsmittel Methylethylketoxim zugesetzt. Bei Methylethylketoxim handelt es sich um ein seit Jahrzehnten in Alkydharzlacken eingesetztes Hautverhütungsmittel. Der Vorteil von Methylethylketoxim ist, dass es wegen seines hohen Dampfdrucks während und nach der Applikation der Beschichtungsmasse schnell verdunstet und damit die Trocknung der Beschichtungsmasse nicht verzögert. Innerhalb der EU wird Methylethylketoxim jedoch als krebsverdächtig eingestuft. In Deutschland liegt der Arbeitsplatzgrenzwert (AGW) für Methylethylketoxim bei 1 mg/m³.

Gemäß der DE 101 33 727 A1 soll sich das Hautverhütungsmittel Methylethylketoxim in Lackformulierungen ersetzen lassen durch spezifische wässrige Mischungen zum Beispiel enthaltend einerseits Diethylhydroxylamin und andererseits Diethylformamid, 2,4-Pentandion, N-Methylacetoacetamid oder Ethylformiat. Die Zurverfügungstellung von exakt eingestellten Mischungen an chemischen Verbindungen ist per se material- und arbeitsaufwändig.

In der DE 102 05 128 A1 wird versucht, anstatt die als krebserregend geschilderten Butanonoxim- Hautverhütungsmittel durch geeignete Kandidaten zu ersetzen, hierauf vollständig zu verzichten. Dieses soll mit einer lufttrocknenden Beschichtungszusammensetzungen gelingen, die 5 bis 40 Gew.-% eines mittel- bis langöligen Alkydharzes mit einem Ölgehalt von 40 oder mehr Gew.-%, 5 bis 40 Gew.-% eines aliphatenlöslichen Acrylharzes oder eines Acrylcopolymerisatharzes, 5 bis 50 Gew.-% eines Füllstoffs und/oder Pigments, 0,05 bis 1 Gew.-% eines Sekundärtrockners, bezogen auf das Metall, 10 bis 45 Gew.-% eines Lösungsmittels und bis zu 5 Gew.-% eines Verdickungsmittels, eines Mattierungsmittels, eines Silikonöls und/oder mindestens eines weiteren Zusatzstoffes enthält.

Die EP 2 243 808 A1 betrifft eine Pigmentpaste zum Tönen eines Anstrichmittels enthaltend ein organisches Lösungsmittel, ein Pigment, einen Alkydharz mit einer Viskosität, gemessen bei 23°C und bei einer Schergeschwindigkeit von 100 s⁻¹, von mindestens 5 Pas, und ein Netzmittel, wobei die Pigmentpaste eine Viskosität, gemessen bei 23°C und einer Schergeschwindigkeit von 100 s⁻¹, von 0,1 bis 8 Pas sowie einen Feststoffgehalt von mindestens 60 Gew.% aufweist. Diese Pigmentpasten sollen auch bei hohen Feststoffgehalten sowie bei Verwendung von Alkydharzen mit einer Viskosität von mehr als 5 Pas, gemessen bei 23°C und einer Schergeschwindigkeit von 100 s⁻¹, eine für die praktische Anwendung zweckmäßige Viskosität aufweisen. Als geeignetes Hautverhinderungsmittel wird einzig Methylethylketoxim ausdrücklich genannt.

Die EP 0 599 105 A1 betrifft eine keramische Farbpaste, insbesondere eine Alkydharze enthaltende Farbpaste, zur Herstellung von Dekoren auf Oberflächen aus Glas, Porzellan oder Keramik sowie ein Druckmedium zur Herstellung der Farbpaste. Die Hautbildung wird durch die Anwesenheit eines Aldoxims oder Ketoxims mit 3 bis 6 C-Atomen oder eines Antioxidans für Polymersysteme vermieden.

In der DE 34 18 988 A1 werden als Ersatz für das Hautverhütungsmittel Methylethylketoxim aliphatische alpha-Hydroxyketone wie Hydroxyaceton und Hydroxybutanon vorgeschlagen. Hydroxyaceton ist hygroskopisch, dessen Dämpfe können mit Luft ein explosionsfähiges Gemisch ergeben.

Es wäre daher wünschenswert, auf lösemittelhaltige Farbtonpasten zurückgreifen zu können, die nicht mehr mit den Nachteilen des Stands der Technik behaftet sind.

Der vorliegenden Erfindung lag daher die Aufgabe zugrunde, lösemittelhaltige Farbtonpasten verfügbar zu machen, die ohne Methylethylketoxim auskommen, gleichwohl auch bei längeren Standzeiten nicht zur Hautbildung neigen.

Demgemäß wurde eine lösemittelhaltige Farbtonpaste, insbesondere Pigmentpaste, zum Abtönen von Beschichtungsmassen gefunden, enthaltend oder bestehend aus
a) mindestens einem organischen Lösungsmittel,
b) mindestens einem Pigment und/oder mindestens einem Farbstoff, insbesondere mindestens einem Pigment,
c) mindestens einem oxidativ trocknenden organischen Bindemittel, ausgewählt aus der Gruppe bestehend aus mindestens einem oxidativ trocknenden mittelöligen und/oder langöligen Alkydharz, insbesondere mindestens einem oxidativ trocknenden langöligen Alkydharz,
d) mindestens einem Additiv, insbesondere mindestens einem Netz- und/oder Dispergiermittel, und
e) mindestens einem Hautverhütungsmittel, umfassend oder bestehend aus mindestens einem Pentanonoxim,
   wobei die Menge an dem mindestens einen Hautverhütungsmittel, insbesondere an dem Pentanonoxim, kleiner oder gleich 1,0 Gewichtsprozent, insbesondere kleiner oder gleich 0,8 Gewichtsprozent, bezogen auf das Gesamtgewicht der Farbtonpaste, insbesondere Pigmentpaste, ist, sowie,
f) gegebenenfalls mindestens einen Füllstoff und/oder
g) gegebenenfalls mindestens einen Pigmentsynergisten.

Mit den erfindungsgemäßen Farbtonpasten sind abgetönte Beschichtungsmassen zugänglich, die sich durch Trocknungszeiten auszeichnen, die nicht länger sind als solche, die üblicherweise mit herkömmlichen Systemen, die mit Methylethylketoxim als Hautverhütungsmittel arbeiten, erhalten werden.

Das Pentanonoxim stellt bevorzugt 2-Pentanonketoxim, 3-Pentanonketoxim oder eine Mischung aus 2-Pentanonketoxim und 3-Pentanonketoxim dar.

Als besonders vorteilhaft hat sich herausgestellt, dass mit den erfindungsgemäßen Farbtonpasten die Hautbildung nahezu vollständig bzw. vollständig auch über längere Standzeiten verhindert werden kann, wenn die Farbtonpaste, insbesondere Pigmentpaste, im Wesentlichen frei von Methylethylketoxim ist. Hierbei können die erfindungsgemäße Farbtonpaste insbesondere auch im Wesentlichen ausschließlich 2-Pentanonketoxim und/oder 3-Pentanonketoxim als Hautverhütungsmittel aufweisen. Demgemäß liegen in bevorzugten Ausführungsformen erfindungsgemäßer Farbtonpasten neben den Pentanonoximen gemäß Komponente e) im Wesentlichen keine weiteren Hautverhütungsmittel vor. Mit den erfindungsgemäßen Farbtonpasten kann demgemäß das Krebsrisiko beim Arbeiten mit denselben, das vormals auf den Einsatz von Methylethylketoxim als Hautverhütungsmittel zurückging, eliminiert werden.

Für das oxidativ trocknende organische Bindemittel gemäß Komponente c) greift man bevorzugt zurück auf oxidativ trocknende langölige Alkydharze. Bei solchen oxidativ trocknenden langöligen Alkydharzen basiert der Langölanteil vorzugsweise auf Linolsäure, Linolensäure und/oder Ölsäure, gegebenenfalls unter Zusatz von Palmitinsäure. Hierbei sind Langölanteile enthaltend Linolsäure, Linolensäure, Ölsäure und Palmitinsäure besonders bevorzugt. Für den Mittelölanteil der oxidativ trocknenden mittel öligen Alkydharze kann auf Linolsäure, Linolensäure und/oder Ölsäure, gegebenenfalls unter Zusatz von Palmitinsäure, zurückgegriffen werden. Hierbei sind Mittelölanteile enthaltend Linolsäure, Linolensäure, Ölsäure und Palmitinsäure besonders bevorzugt.

Die erfindungsgemäße Farbtonpaste kann in einer weiteren Ausgestaltung neben dem mindestens einem oxidativ trocknenden organischen Bindemittel, ausgewählt aus der Gruppe bestehend aus mindestens einem oxidativ trocknenden mittelöligen und/oder langöligen Alkydharz, insbesondere einem oxidativ trocknenden langöligen Alkydharz als weiteres oxidativ trocknendes organisches Bindemittel mindestens einen oxidativ trocknenden modifizierten mittelöligen und/oder langöligen Alkydharz, insbesondere einen oxidativ trocknenden modifizierten langöligen Alkydharz, aufweisen. Diese modifizierten mittelöligen und/oder längöligen Alkydharze sind dabei bevorzugt ausgewählt aus der Gruppe bestehend aus silikonisierten Alkydharzen, acrylierten Alkydharzen, Isocyanatmodifizierten Alkydharzen und beliebigen Mischungen hiervon. Unter diesen wird bevorzugt auf Isocyanat-modifizierte langölige Alkydharze zurückgegriffen.

Unter den oxidativ trocknenden langöligen Alkydharzen sind diejenigen besonders bevorzugt, um die der Erfindung zu Grunde liegende Aufgabe zu lösen, die, ermittelt gemäß DIN 53241-1, eine Jodzahl nicht größer als 120, insbesondere nicht größer als 100, bevorzugt im Bereich von 20 bis 120 oder 20 bis 100 und besonders bevorzugt im Bereich von 40 bis 80 aufweisen, jeweils bezogen auf 100% Festkörper des Bindemittels.

Unter einem langöligen Alkydharz sollen im Sinne der vorliegenden Erfindung solche langöligen Systeme verstanden werden, die einen Ölgehalt bzw. eine Öllänge oberhalb von 60 % aufweisen. Unter einem kurzöligen Alkydharz soll demgegenüber eine solche kurzölige Verbindung verstanden werden, die über einen Ölgehalt bzw. eine Öllänge verfügt, die üblicherweise im Bereich von 20 bis 40 % liegt. Für mittelölige Alkydharze liegt der Ölgehalt bzw. die Öllänge regelmäßig im Bereich von 40 bis 60 %. Unter dem Ölgehalt bzw. der Öllänge soll hierbei in Bezug auf das Gesamtgewicht des Alkdyharzes der gewichtsprozentige Anteil derjenigen Fettsäuren, einschließlich Polyolrest verstanden werden, die mit den Hydroxygruppen der Polyoleinheiten im Alkydharz verbunden vorliegen. Im Sinne der vorliegenden Erfindung werden dadurch die Begriffe "Ölgehalt" und "Öllänge" synonym verwandt.

Die mittel- und langöligen Alkydharze werden häufig gelöst in Kohlenwasserstoffen, insbesondere in entaromatisierten Kohlenwasserstoffen, in den erfindungsgemäßen Farbtonpasten eingesetzt. Das für die erfindungsgemäßen Farbtonpasten verwendete Bindemittel stellt bevorzugt auch eine solche Bindemittelmischung dar, umfassend langölige Alkydharze, insbesondere Isocyanat-modifizierte langölige Alkydharze, sowie Haftharze. Auf Haftharze greift man bevorzugt für die Beschichtung von Metalloberflächen zurück. Besonders zuverlässig stellen sich die vorteilhaften Eigenschaften der erfindungsgemäßen Farbtonpasten, insbesondere Pigmentpasten, auch bei Verwendung von solchen oxidativ trocknenden organischen Bindemitteln, ausgewählt aus der Gruppe bestehend aus mindestens einem oxidativ trocknenden mittelöligen und/oder langöligen Alkydharz, insbesondere mindestens einem oxidativ trocknenden langöligen Alkydharz, ein, die ein mittleres Molekulargewicht Mn größer oder gleich 1400 g/mol, bevorzugt größer oder gleich 1500 g/mol und besonders bevorzugt größer oder gleich 1500 g/mol, aufweisen. Alternativ oder zusätzlich sind auch derartige erfindungsgemäße Farbtonpasten bevorzugt, bei denen ein solches oxidativ trocknendes organisches Bindemittel, ausgewählt aus der Gruppe bestehend aus mindestens einem oxidativ trocknenden mittelöligen und/oder langöligen Alkydharz, insbesondere mindestens einem oxidativ trocknenden langöligen Alkydharz, zum Einsatz kommt, das über ein mittleres Molekulargewicht Mw größer oder gleich 4500 g/mol, bevorzugt größer oder gleich 5500 g/mol und besonders bevorzugt größer oder gleich 6000 g/mol verfügt. Die Bedeutung und die Bestimmung von Gewichtsmittelwert Mw und Zahlenmittelwert Mn ist dem Fachmann bekannt. Exemplarisch sei auf Sau Saechtlink Kunststoff-Taschenbuch, Hanser Verlag, 29. Ausg., Seiten 18 bis 21, verwiesen. Ferner sind alternativ oder zusätzlich auch derartige erfindungsgemäße Farbtonpasten bevorzugt, bei denen ein solches oxidativ trocknendes organisches Bindemittel, ausgewählt aus der Gruppe bestehend aus mindestens einem oxidativ trocknenden mittelöligen und/oder langöligen Alkydharz, insbesondere mindestens einem oxidativ trocknenden langöligen Alkydharz, zum Einsatz kommt, das über eine Viskosität, bestimmt bei 20°C und einer Schergeschwindigkeit von 500 s-1, größer oder gleich 4 Pas, bevorzugt größer oder gleich 5 Pas, besonders bevorzugt größer oder gleich 6 Pas, insbesondere größer oder gleich 7 Pas und insbesondere bevorzugt größer oder gleich 8 Pas, aufweist. Die Viskositäten der genannten Alkydharze können unter Verwendung der vorangehend genannten Parameter (20°C, Schergeschwindigkeit von 500 s-1) mit dem Rotationsrheometer Haake RheoStress 1 mit Platte-Kegel Messgeometrie (Kegeldurchmesser 20 mm, 1° Winkel, Messspalt: 0,052 mm, Messzeit: 10 s) bestimmt werden.

Für die erfindungsgemäßen Farbtonpasten kommen demgemäß bevorzugt als Lösemittel, insbesondere aromatenfreie, aliphatische Kohlenwasserstoffe, zum Einsatz. Diese sind hierbei insbesondere ausgewählt aus der Gruppe bestehend aus, vorzugsweise entaromatisiertem, Testbenzin, n-Paraffinen, Isoparaffinen, Cycloparaffinen und beliebigen Mischungen hiervon.

Solche erfindungsgemäßen Farbtonpasten sind besonders bevorzugt, die im Wesentlichen frei von aromatischen Lösemitteln sind.

Exemplarisch seien als geeignete Pigmente anorganische Pigmente wie Bunt-, Schwarz- und Weißpigmente (Farbpigmente) sowie Glanzpigmente und organische Pigmente wie organische Buntpigmente und organische unbunte Pigmente genannt.

Als geeignete anorganische Weißpigmente kommen zum Beispiel Titandioxid, Zinkweiß, Farbenzinkoxid; Zinksulfid und/oder Lithopone, Zirkonoxid und/oder Ettringit in Betracht. Unter den anorganischen Schwarzpigmenten kann zum Beispiel ausgewählt werden unter Eisenoxidschwarz, Eisen/Manganoxid, Chrom/Eisenoxid, Chrom/Eisen/Nickeloxid, Kupfer/Eisen/Manganoxid, Kobalt/Eisenoxid, Chrom/Kobalt/Eisenoxid und/oder Rußschwarz. Ebenso kommen NIR-reflektierende Schwarzpigmente der C.I.-Pigmentklassen P.Br. 29 und P.G. 17 in Betracht.

Als geeignete anorganische Buntpigmente kann zum Beispiel zurückgegriffen werden auf Chromoxidgrün, Cobaltgrün, Kobaltblau, Ultramarinblau, Ultramarinviolett, Kobalt- und Manganviolett, Cersulfid, Eisenoxidrot, Eisenoxidbraun, Eisenoxidgelb, Chromtitangelb, Zinnzinktitanat, Nickeltitangelb, Chromgelb und/oder Bismutvanadat.

Als geeignete organische Buntpigmente kann zum Beispiel zurückgegriffen werden auf C.I. Pigment Blue 15, C.I. Pigment Blue 15:1, C.I. Pigment Blue,15:2, C.I. Pigment Blue 15:3, C.I. Pigment Blue 15:4, C.I. Pigment Blue 15:6, C.I Pigment Blue 16, C.I. Pigment Green 7, C.I. Pigment Green 36, C.I. Pigment Orange 36, C.I. Pigment Orange 43, C.I. Pigment Orange 67, C.I. Pigment Orange 73, C.I. Pigment Red 122, C.I. Pigment Red 168, C.I. Pigment Red 179, C.I. Pigment Red 188, C.I. Pigment Red 254, C.I. Pigment Red 264, C.I. Pigment Red 282, C.I. Pigment Violett 19, C.I. Pigment Violett 23, Pigment Yellow 74, Pigment Yellow 83, Pigment Yellow 97, C.I. Pigment Yellow 110, C.I. Pigment Yellow 138, C.I. Pigment Yellow 154 oder beliebige Mischungen dieser Pigmente.

Geeignete organische Pigmente können hierbei z.B. auch ausgewählt werden aus der Gruppe bestehend aus Monoazopigmenten, insbesondere C.I. Pigment Braun 25, C.I. Pigment Orange 5, 13, 38, 64 oder 74, C.I. Pigment Rot 1, 2, 3, 4, 5, 8, 9, 12, 17, 22, 23, 31, 48: 1, 48: 2, 48: 3, 49, 51: 1, 52: 1, 52: 2, 53, 53: 1, 53: 3, 57: 1, 58: 2, 58: 4, 112, 146, 148, 170, 175, 184, 185, 187, 191: 1, 208, 210, 245, 247 und/oder 251, C.I. Pigment Gelb 1, 3, 62, 73, 120, 151, 175, 181, 183 und/oder 191 und/oder C.I. Pigment Violett 32, Diazopigmenten, insbesondere C.I. Pigment Orange 16, 34, 44 und/oder 72 und/oder C.I. Pigment Gelb 12, 13, 14, 16, 17, 81, 106, 113, 126, 127, 155, 174, 176, 18 und/oder 188, Diazokondensationspigmenten, insbesondere C.I. Pigment Gelb 91, 95 und/oder 128 und/oder C.I. Pigment Rot 144, 166, 214, 220, 221, 242 und/oder 262 und/oder C.I. Pigment Braun 23 und/oder 41, Anthrachinonpigmenten, insbesondere C.I. Pigment Gelb 147, 177 und/oder 199 und/oder C.I. Pigment Violett 31, Anthrapyrimidinpigmenten, insbesondere C.I. Pigment Gelb 108, Chinacridonpigmenten, insbesondere C.I. Pigment Orange 48 und/oder 49 und/oder C.I. Pigment Rot 202, 206 und/oder 209 und/oder Diketopyrrolopyrrolpigmenten, insbesondere C.I. Pigment Orange 71 und/oder 81 und/oder C.I. Pigment Rot 255, 270 und/oder 272, Dioxazinpigmenten, insbesondere C.I. Pigment Violett 37 und/oder C.I. Pigment Blau 80, Flavanthronpigmenten, insbesondere C.I. Pigment Gelb 24, Indanthronpigmenten, insbesondere C.I. Pigment Blau 60 und/oder 64, Isoindolinpigmenten, insbesondere C.I. Pigment Orange 61 und/oder 69 und/oder C.I. Pigment Rot 260 und/oder C.I. Pigment Gelb 185, Isoindolinonpigmenten, insbesondere C.I. Pigment Gelb 109, 139 und/oder 173, Isoviolanthronpigmenten, insbesondere C.I. Pigment Violett 31, Metallkomplexpigmenten, insbesondere C.I. Pigment Rot 257 und/oder C.I. Pigment Gelb 117, 129, 151, 153 und/oder 177 und/oder C.I. Pigment Grün 8, Perinonpigmenten, insbesondere C.I. Pigment Orange 43, und/oder C.I. Pigment Rot 194, Perylenpigmenten, insbesondere C.I. Pigment Schwarz 31 und/oder C.I. Pigment Schwarz 32, C.I. Pigment Rot 123, 149, 178, 179, 190 und/oder 224 und/oder C.I. Pigment Violett 29, Pyranthronpigmenten, insbesondere C.I. Pigment Orange 51 und/oder C.I. Pigment Rot 216, Pyrazolochinazolonpigmenten, insbesondere C.I. Pigment Rot 251, Thioindigopigmenten, insbesondere C.I. Pigment Rot 88 und/oder 181 und/oder C.I. Pigment Violett 38, Triarylcarboniumpigmenten, insbesondere C.I. Pigment Blau 1, 61 und/oder 62 und/oder C.I. Pigment Grün 1 und/oder C.I. Pigment Rot 81, 81: 1 und/oder 169 und/oder C.I. Pigment Violett 1, 2, 3 und/oder 27.

Geeignete Füllstoffe können zum Beispiel ausgewählt sein aus der Gruppe bestehend aus Calciumcarbonat, z.B. gefälltem Calciumcarbonat (auch synthetisches Calciumcarbonat genannt) und/oder natürlichem Calciumcarbonat, insbesondere natürliches Calciumcarbonat; Dolomit; Silikaten, ausgewählt aus der Gruppe bestehend aus Talkum, insbesondere plättchenförmigem Talkum, Glimmer, vorzugsweise mikronisiertem Glimmer, Feldspat, Pyrophyllit, Serpentin, Kaolinit und deren Mischungen; Bariumsulfat, z.B. synthetischem Bariumsulfat und/oder natürlichem Bariumsulfat, insbesondere synthetisches Bariumsulfat; und einer beliebigen Mischung hiervon. Besonders bevorzugte Füllstoffe umfassen Dolomit, Talkum, synthetisches Bariumsulfat, mikronisierten Glimmer sowie beliebige Mischungen der vorangehend genannten Füllstoffe. Bevorzugt wird hierbei auf solche Füllstoffe zurückgegriffen, die einen Brechungsindex besitzen, der dem Brechungsindex des verwendeten Bindemittels entspricht bzw. nahekommt. Auf diese Weise erscheint dieser Füllstoff transparent bzw. nahezu transparent. Als ein solcher geeigneter Füllstoff kommt hier Bariumsulfat in Betracht. Ganz besonders bevorzugt wird auf synthetisches Bariumsulfat zurückgegriffen. Füllstoffe liegen in den erfindungsgemäßen Farbtonpasten als optionaler Bestandteil vor. Sie werden, sofern in den erfindungsgemäßen Farbtonpasten enthalten, darin vorzugsweise in Mengen nicht oberhalb von 20 Gew.-%, bevorzugt nicht oberhalb von 10 Gew.-% und besonders bevorzugt nicht oberhalb von 6 Gew.-% eingesetzt.

Außerdem können die erfindungsgemäßen Farbtonpasten sogenannte Pigmentsynergisten enthalten. Hierbei handelt es sich regelmäßig um Verbindungen, die den Pigmentchromophor ganz oder teilweise in ihrer Molekülstruktur enthalten. Die Struktur des Pigmentsynergisten hat dabei nicht notwendigerweise mit der Struktur des Pigments übereinzustimmen. Geeignete Pigmentsynergisten für die erfindungsgemäßen Farbtonpasten umfassen zum Beispiel die kommerziell erhältlichen Produkte Solsperse 22000 und Solsperse 5000 der Firma Lubrizol Corp. Pigmentsynergisten werden, sofern in den erfindungsgemäßen Farbtonpasten enthalten, darin vorzugsweise in Mengen nicht oberhalb von 5 Gew.-%, bevorzugt nicht oberhalb von 2 Gew.-% und besonders bevorzugt nicht oberhalb von 1 Gew.-% eingesetzt.

Ferner hat sich überraschend gezeigt, dass die erfindungsgemäßen Farbtonpasten auch mit hohen Feststoffanteilen gut verarbeit- und applizierbar sind. Beispielsweise sind mit den erfindungsgemäßen Farbtonpasten Feststoffanteile im Bereich von 65 bis 90 Gewichtsprozent, vorzugsweise im Bereich von 70 bis 85 Gewichtsprozent, möglich, bezogen auf das Gesamtgewicht der Farbtonpaste, insbesondere Pigmentpaste.

Die erfindungsgemäßen Farbtonpasten verfügen üblicherweise über eine Viskosität im Bereich von 200 bis 1400 mPas, vorzugsweise im Bereich von 400 bis 1200 mPas, bestimmt bei einer Schergeschwindigkeit von 200 s⁻¹ und einer Temperatur von 20°C.

Als vorteilhaft hat sich auch herausgestellt, dass mit den erfindungsgemäßen Farbtonpasten Ausführungsvarianten zugewiesen, deren VOC-Anteil kleiner 300 g/l, bestimmt nach DIN EN ISO 11890-1 (September 2007), ist. Ferner hat es sich hierbei als vorteilhaft erwiesen, oxidativ trocknende organische Bindemittel mit einem VOC-Anteil kleiner 200 g/1, vorzugsweise kleiner 100 g/1, bestimmt nach DIN EN ISO 11890-1 (September 2007), einsetzen zu können.

Ferner sind mit den erfindungsgemäßen Farbtonpasten Systeme zugänglich, deren Flammpunkt oberhalb von 60 °C, bestimmt gemäß DIN EN ISO 1523:2002-08, liegt. Mit dem Einsatz der erfindungsgemäßen Farbtonpasten können demgemäß auch hohe Brandschutzanforderungen eingehalten werden.

Bevorzugte Netz- und/oder Dispergiermittel sind ausgewählt aus der Gruppe bestehend aus den Salzen ungesättigter Polyamide, den Salzen von sauren Polyestern, insbesondere von niedermolekularen sauren Polyestern und/oder fettsäuremodifizierten Polyestern, und deren beliebigen Mischungen.

Eine besonders vorteilhafte Ausgestaltung einer erfindungsgemäßen Farbtonpaste, insbesondere Pigmentpaste, enthält bzw. besteht aus
10 bis 35 Gewichtsprozent, insbesondere 15 bis 30 Gewichtsprozent, an Komponente a),
5 bis 60 Gewichtsprozent, insbesondere 9 bis 56 Gewichtsprozent, an Komponente b), insbesondere an Pigment,
10 bis 70 Gewichtsprozent, insbesondere 21 bis 60 Gewichtsprozent, an Komponente c), insbesondere an dem mindestens einen oxidativ trocknenden langöligen Alkydharz,
0,5 bis 15 Gewichtsprozent, insbesondere 1 bis 8 Gewichtsprozent, an Komponente d) und
0,5 bis 0,95 Gewichtsprozent, insbesondere 0,6 bis 0,8 Gewichtsprozent, an Komponente e), insbesondere an 2-Pentanonoxim und/oder 3-Pentanonketoxim, sowie
0 bis 20 Gew.-%, insbesondere 0,1 bis 10 Gew.-%, und besonders bevorzugt 0,2 bis 6 Gew.-%, an Komponente f), vorzugsweise an synthetischem Bariumsulfat,
0 bis 5 Gew.-%, insbesondere 0,01 bis 2 Gew.-%, und besonders bevorzugt 0,1 bis 1,0 Gew.-%, an Komponente g),
wobei die Menge an die Zusammensetzung bildenden Komponenten stets so gewählt wird, dass sich in der Summe 100,0 Gew.-% ergeben.

Zwecks Initiierung und Forcierung der chemischen, d.h. oxidativen Trocknung vermittels Luftsauerstoff setzt können die erfindungsgemäßen Farbtonpasten ferner mindestens einen mindestens einen Sekundärtrockner aufweisen, insbesondere ausgewählt aus der Gruppe bestehend aus mindestens einem organischen Salz des Zirkoniums, Calciums, Strontiums, Lithiums und Aluminiums, insbesondere einem organischen Salz des Zirkoniums, Calciums und/oder Strontiums, vorzugsweise mindestens einem Calciumcarboxylat (Komponente h)).

In einer zweckmäßigen Ausgestaltung der erfindungsgemäßen Beschichtungsmassen sind die Additive ausgewählt aus der Gruppe bestehend aus Netz- und/oder Dispergiermitteln, Entschäumern, Stabilisatoren, Flammschutzmitteln, Hydrophobierungsmitteln, Mattierungsmitteln, insbesondere Fällungskieselsäure, Rheologieadditiven, insbesondere Verdickern, Oberflächenadditiven, insbesondere Silikonoberflächenadditiven, beispielsweise polyethermodifiziertes Polymethylalkylsiloxan und/oder Silikonpolyether-Copolymere, Puffersubstanzen, Neutralisationsmittel, pH-Regulatoren, UV-Absorbern, Radikalfängern und Mischungen dieser Verbindungen. Besonders bevorzugt kommen als Additive Netz- und/oder Dispergiermittel zum Einsatz, insbesondere ergänzt durch mindestens einen Verdicker und/oder mindestens einen Entschäumer.

Besonders geeignete Verdicker sind dabei ausgewählt aus der Gruppe bestehend aus Schichtsilikaten, insbesondere organisch modifizierten Schichtsilikaten, pyrogenen Kieselsäuren, insbesondere hydrophil modifizierten pyrogenen Kieselsäuren, Verdickern auf Basis modifizierter Harnstoffe, insbesondere ein Verdicker aus Polyurethan-modifiziertem Harnstoff, beispielsweise ein Reaktionsprodukt aus Toluol-2,4-diisocyanat mit Xylylendiamin sowie Triethylenglykol- und/oder Tetraethylenglykolmonobutylether, und thixotropen Alkydharzen, insbesondere erhalten durch partielle Umsetzung von Polyamiden aus polymeren Fettsäuren und Polyaminen mit Alkylharzen, und beliebigen Mischungen hiervon.

Netz- und Dispergiermittel können den erfindungsgemäßen Beschichtungsmassen zugesetzt werden, um die Pigmente und/oder Füllstoffe zu stabilisieren und um beispielsweise ein Sedimentieren von Pigmenten und Füllstoffen zu verhindern. Netz- und Dispergiermittel tragen regelmäßig dazu bei, dass die Pigmente und/oder Füllstoffe nicht reagglomerisieren. Über den Zusatz an Netz- und Dispergiermitteln kann man zu einer verbesserten Lagerstabilität gelangen. Auch kann die Dispergierbarkeit verbessert werden, indem man mit Hilfe von Netz- und Dispergiermitteln die Pigmente stabilisiert bzw. eine Agglomeratbildung verhindert. Des Weiteren können die Netz- und/oder Dispiergiermittel zum Beispiel zu einem verbesserten Deckvermögen verhelfen. Geeignete Netzmittel umfassen beispielsweise die Salze ungesättigter Polyamide und/oder die Salze von sauren Polyestern, insbesondere von niedermolekularen sauren Polyestern und/oder fettsäuremodifizierten Polyestern. Ferner können Netzmittel ausgewählt werden aus der Gruppe bestehend aus Alkylphenolpolyoxyethylenkondensaten, Polyacrylsäuren, Phosphatestern, Polyglykolethern, Arylpolyglykolethern, Polyarylalkylphenolethoxylaten, Fettalkoholen, Fettalkoholpolyglykolethern, Alkylethoxylaten, Alkylethersulfaten, Alkyletherphosphorsäureestern, Sulfosuccinatsäureestern, Alkybenzolsulfonaten, Fettalkoholsulfaten, Alkylpolyglykosiden, Polysorbaten, Acrylcopolymeren, Netzmitteln auf Basis modifizierter erdölstämmiger Polymere, Netzmitteln auf Basis modifizierter Polyurethane und beliebigen Mischungen der vorangehenden Substanzen.

Die der Erfindung zugrundeliegenden Aufgabe wird des Weiteren gelöst durch ein Kit-of-parts Beschichtungssystem enthaltend oder gebildet aus A) mindestens einer erfindungsgemäßen lösemittelhaltigen Farbtonpaste, insbesondere Pigmentpaste, und B) mindestens einer Beschichtungsmasse. Für die Beschichtungsmasse dieses erfindungsgemäßen Beschichtungssystems kann dabei zurückgegriffen werden auf eine lösemittelhaltige Lasur, einen Lösemittellack, eine lösemittelhaltige Farbe eine lösemittelhaltige Bodenbeschichtung. Sehr verständlich kann diese Beschichtungsmasse auch die Grundrezeptur für die genannten Beschichtungsmaterialien bilden.

Unter den erfindungsgemäßen Beschichtungssystemen sind solche besonders bevorzugt, bei denen
x1) die Komponente A) und die Komponente B) jeweils einen VOC-Anteil kleiner 300 g/l, bestimmt nach DIN EN ISO 11890-1 (September 2007), aufweisen oder bei denen
x2) die Komponente A) einen VOC-Anteil kleiner 300 g/l, und die Komponente B) einen VOC-Anteil größer oder gleich 300 g/l, bestimmt nach DIN EN ISO 11890-1 (September 2007), aufweisen, oder bei denen
x3) die Komponente A) einen VOC-Anteil größer oder gleich 300 g/l, und die Komponente B) einen VOC-Anteil kleiner 300 g/l, bestimmt nach DIN EN ISO 11890-1 (September 2007), aufweisen. Dabei kann in besonders vorteilhaften Ausführungsformen x1), x2) und x3) vorgesehen sein, dass die VOC-Gehalte und/oder Mengen an den Komponenten A) und B) derart eingestellt sind, dass ein hieraus erhaltenes abgetöntes Anstrichsystem einen VOC-Gehalt kleiner 300 g/1, bestimmt nach DIN EN ISO 11890-1 (September 2007), aufweist.

Die erfindungsgemäßen lösemittelhaltigen Farbtonpasten lassen sich ohne weiteres in Abtönmaschinen, insbesondere Point-of-sale-Maschinen, einsetzen. Sie sind zum Einfärben von lösemittelhaltigen Farben, Lacken und Lasuren. Mit den erfindungsgemäßen lösemittelhaltigen Farbtonpasten lassen sich somit abgetönte Anstrichsysteme, insbesondere von lösemittelhaltigen Lasuren, lösemittelhaltigen Lacken, lösemittelhaltigen Farben und/oder lösemittelhaltige Bodenbeschichtungen herstellen, herstellen.

Die der Erfindung zu Grunde liegende Aufgabe wird des Weiteren gelöst durch ein abgetöntes Anstrichsystem, erhältlich aus dem erfindungsgemäßen Beschichtungssystem durch Vermischen der Farbtonzusammensetzung A) mit der Beschichtungsmasse B).

Das erfindungsgemäße Anstrichsystem kann dabei insbesondere eine abgetönte lösemittelhaltige Lasur, lösemittelhaltigen Lack, lösemittelhaltige Farben und/oder lösemittelhaltige Bodenbeschichtung umfassen oder darstellen.

Ferner wird die der Erfindung zu Grunde liegende Aufgabe gelöst durch einen Anstrich, erhältlich durch Auftragen des erfindungsgemäßen abgetönten Anstrichsystems auf eine Substratoberfläche. Dieses Anstrichsystem oder dieser Anstrich verfügen bevorzugt über einen VOC-Gehalt kleiner 300 g/1, bestimmt nach DIN EN ISO 11890-1 (September 2007).

Schließlich wird die der Erfindung zu Grunde liegende Aufgabe gelöst durch ein Verfahren zum Abtönen einer Beschichtungsmasse, umfassend die Schritte
i) Zurverfügungstellung von mindestens einer erfindungsgemäßen Farbtonpaste, vorzugsweise von mindestens zwei und besonders bevorzugt von mindestens drei erfindungsgemäßen Farbtonpasten,
ii) Zurverfügungstellung von mindestens einer Beschichtungsmasse, wie vorangehend für das erfindungsgemäße Beschichtungssystem spezifiziert, und
iii) Vermischen der Farbtonpaste gemäß i) und der Beschichtungsmasse gemäß ii) unter Erhalt eines abgetönten Anstrichsystems, insbesondere eines erfindungsgemäßen abgetönten Anstrichsystems.

Mit der vorliegenden Erfindung geht die überraschende Erkenntnis einher, dass sich durch den kombinierten Einsatz von spezifischen Pentanonoximen in vorgegebener Menge mit mittelöligen und/oder langöligen Alkydharzen als oxidativ trocknende organische Bindemittel Farbtonpasten erhalten lassen, die auch bei längerer Lager- bzw. Verweilzeit in offenen Gebinden, beispielsweise wenn in Abtönmaschinen vorliegend, nicht zur Antrocknung bzw. Hautbildung neigen. Dies trifft vorteilhafter Weise auch auf solche lösemittelhaltigen Farbtonpasten zu, die aromatenfrei sind und über hohe Feststoffanteile verfügen. Auch Verweilzeiten von über einem Jahr haben sich hierbei in betriebsinternen Tests als unproblematisch erwiesen. Mit den erfindungsgemäßen Farbtonpasten sind abgetönte Beschichtungssysteme zugänglich, die über einen VOC-Gehalt kleiner 300 g/l verfügen. Mit den erfindungsgemäßen Farbtonpasten ist es möglich, das als krebsverdächtig eingestufte Methylethylketoxim als Hautverhütungsmittel mindestens gleichwertig zu ersetzen. Als besonders überraschend hat sich hierbei herausgestellt, dass, obwohl bekannt war, dass 2-Pentanonoxim die Trocknung von abgetönten Beschichtungsmassen verschlechtert, mit den erfindungsgemäßen Farbtonpasten regelmäßig eine zügige Trocknung erreicht wird. Mit den erfindungsgemäßen Farbtonpasten, insbesondere auch mit solchen, die einen hohen Feststoffanteil aufweisen, wird damit ein mindestens gleichwertiger Ersatz zu Farbtonpasten enthaltend Methylethylketoxim hinsichtlich Viskositäts- und Farbstärkestabilität sowie hinsichtlich Trocknungs- und Verarbeitungseigenschaften und auch im Hinblick auf koloristische Eigenschaften zur Verfügung gestellt, und zwar auch noch nach einer Verweilzeit in einer Abtönmaschine von mehr als einem Jahr.

Die in der vorstehenden Beschreibung und in den Ansprüchen offenbarten Merkmale der Erfindung können sowohl einzeln aus auch in jeder beliebigen Kombination für die Verwirklichung der Erfindung in ihren verschiedenen Ausführungsformen wesentlich sein.

## Patentansprüche

1. Lösemittelhaltige Farbtonpaste, insbesondere Pigmentpaste, zum Abtönen von Beschichtungsmassen, enthaltend oder bestehend aus
a) mindestens einem organischen Lösungsmittel,
b) mindestens einem Pigment und/oder mindestens einem Farbstoff, insbesondere mindestens einem Pigment,
c) mindestens einem oxidativ trocknenden organischen Bindemittel, ausgewählt aus der Gruppe bestehend aus mindestens einem oxidativ trocknenden mittelöligen und/oder langöligen Alkydharz, insbesondere mindestens einem oxidativ trocknenden langöligen Alkydharz,
d) mindestens einem Additiv, insbesondere mindestens einem Netz- und/oder Dispergiermittel, und
e) mindestens einem Hautverhütungsmittel, umfassend oder bestehend aus mindestens einem Pentanonoxim,
wobei die Menge an dem mindestens einen Hautverhütungsmittel, insbesondere an dem Pentanonoxim, kleiner oder gleich 1,0 Gewichtsprozent, insbesondere kleiner oder gleich 0,8 Gewichtsprozent, bezogen auf das Gesamtgewicht der Farbtonpaste, insbesondere Pigmentpaste, ist, sowie,
f) gegebenenfalls mindestens einen Füllstoff und/oder
g) gegebenenfalls mindestens einen Pigmentsynergisten.

2. Farbtonpaste nach Anspruch 1, **dadurch gekennzeichnet, dass** Pentanonoxim 2-Pentanonketoxim, 3-Pentanonketoxim oder eine Mischung aus 2-Pentanonketoxim und 3-Pentanonketoxim darstellt.

3. Farbtonpaste nach Anspruch 1 oder 2, **dadurch gekennzeichnet, dass** die Farbtonpaste, insbesondere Pigmentpaste, im Wesentlichen frei von Methyethylketoxim ist und insbesondere im Wesentlichen ausschließlich Pentanonoxim, insbesondere 2-Pentanonketoxim und/oder 3-Pentanonketoxim, als Hautverhütungsmittel aufweist.

4. Farbtonpaste nach einem der vorhergehenden Ansprüche, **dadurch gekennzeichnet, dass**
die Farbtonpaste, insbesondere Pigmentpaste, neben den Ketoximen gemäß Komponente e) im Wesentlichen keine weiteren Hautverhütungsmittel enthält.

5. Farbtonpaste nach einem der vorangehenden Ansprüche, **dadurch gekennzeichnet, dass**
diese im Wesentlichen frei von aromatischen Lösemitteln ist.

6. Farbtonpaste nach einem der vorangehenden Ansprüche, **dadurch gekennzeichnet, dass**
deren Feststoffanteil im Bereich von 65 bis 90 Gewichtsprozent, vorzugsweise im Bereich von 70 bis 85 Gewichtsprozent, bezogen auf das Gesamtgewicht der Farbtonpaste, insbesondere Pigmentpaste, liegt.

7. Farbtonpaste nach einem der vorangehenden Ansprüche, **dadurch gekennzeichnet, dass**
diese über eine Viskosität im Bereich von 200 bis 1400 mPas, vorzugsweisen Bereich von 400 bis 1200 mPas, bestimmt bei einer Schergeschwindigkeit von 200 s⁻¹ und einer Temperatur von 20 °C, verfügt.

8. Farbtonpaste nach einem der vorangehenden Ansprüche, **dadurch gekennzeichnet, dass**
deren VOC-Anteil kleiner 300 g/l, bestimmt nach DIN EN ISO 11890-1 (September 2007), ist.

9. Farbtonpaste nach einem der vorangehenden Ansprüche, **dadurch gekennzeichnet, dass**
deren Flammpunkt oberhalb von 60 °C, bestimmt gemäß DIN EN ISO 1523:2002-08, liegt.

10. Farbtonpaste nach einem der vorangehenden Ansprüche, **dadurch gekennzeichnet, dass**
das Netzmittel ausgewählt ist aus der Gruppe bestehend aus den Salzen ungesättigter Polyamide, den Salzen von sauren Polyestern, insbesondere von niedermolekularen sauren Polyestern und/oder fettsäuremodifizierten Polyestern, Alkylphenolpolyoxyethylenkondensaten, Polyacrylsäuren, Phosphatestern, Polyglykolethern, Arylpolyglykolethern, Polyarylalkylphenolethoxylaten, Fettalkoholen, Fettalkoholpolyglykolethern, Alkylethoxylaten, Alkylethersulfaten, Alkyletherphosphorsäureestern, Sulfosuccinatsäureestern, Alkybenzolsulfonaten, Fettalkoholsulfaten, Alkylpolyglykosiden, Polysorbaten, Aciylcopolymeren, Netzmitteln auf Basis modifizierter erdölstämmiger Polymere, Netzmitteln auf Basis modifizierter Polyurethane und beliebigen Mischungen der vorangehenden Substanzen.

11. Farbtonpaste, insbesondere Pigmentpaste, nach einem der vorangehenden Ansprüche, enthaltend oder bestehend aus
10 bis 35 Gewichtsprozent, insbesondere 15 bis 30 Gewichtsprozent, an Komponente a),
5 bis 60 Gewichtsprozent, insbesondere 9 bis 56 Gewichtsprozent, an Komponente b), insbesondere an Pigment,
10 bis 70 Gewichtsprozent, insbesondere 21 bis 60 Gewichtsprozent, an Komponente c), insbesondere an dem mindestens einen oxidativ trocknenden langöligen Alkydharz,
0,5 bis 15 Gewichtsprozent, insbesondere 1 bis 8 Gewichtsprozent, an Komponente d) und
0,50 bis 0,95 Gewichtsprozent, insbesondere 0,6 bis 0,8 Gewichtsprozent, an Komponente e), insbesondere an 2-Pentanonoxim und/oder 3-Pentanonketoxim, sowie 0 bis 20 Gew.-%, insbesondere 0,1 bis 10 Gew.-%, und besonders bevorzugt 0,2 bis 6 Gew.-%, an Komponente f), vorzugsweise an synthetischem Bariumsulfat,
0 bis 5 Gew.-%, insbesondere 0,01 bis 2 Gew.-%, und besonders bevorzugt 0,1 bis 1,0 Gew.-%, an Komponente g),
wobei die Menge an die Zusammensetzung bildenden Komponenten stets so gewählt wird, dass sich in der Summe 100,0 Gew.-% ergeben.

12. Farbtonpaste nach einem der vorangehenden Ansprüche, **dadurch gekennzeichnet, dass**
das mindestens eine Additiv ausgewählt ist aus der Gruppe bestehend aus Entschäumern, Stabilisatoren, Flammschutzmitteln, Hydrophobierungsmitteln, Mattierungsmitteln, insbesondere Fällungskieselsäure, Rheologieadditiven, insbesondere Verdickern, Oberflächenadditiven, insbesondere Silikonoberflächenadditiven, beispielsweise polyethermodifiziertes Polymethylalkylsiloxan und/oder Silikonpolyether-Copolymere, Puffersubstanzen, Neutralisationsmittel, pH-Regulatoren, UV-Absorbern, Radikalfängern und Mischungen dieser Verbindungen, und insbesondere mindestens einen Verdicker und/oder mindestens einen Entschäumer umfasst.

13. Farbtonpaste nach Anspruch 12, **dadurch gekennzeichnet, dass** der Verdicker ausgewählt ist aus der Gruppe bestehend aus Schichtsilikaten, insbesondere organisch modifizierten Schichtsilikaten, pyrogenen Kieselsäuren, insbesondere hydrophil modifizierten pyrogenen Kieselsäuren, Verdickern auf Basis modifizierter Harnstoffe, insbesondere ein Verdicker aus Polyurethan-modifiziertem Harnstoff, beispielsweise ein Reaktionsprodukt aus Toluol-2,4-diisocyanat mit Xylylendiamin sowie Triethylenglykol- und/oder Tetraethylenglykolmonobutylether, und thixotropen Alkydharzen, insbesondere erhalten durch partielle Umsetzung von Polyamiden aus polymeren Fettsäuren und Polyaminen mit Alkylharzen.

14. Farbtonpaste nach einem der vorangehenden Ansprüche, **dadurch gekennzeichnet, dass**
das mindestens eine oxidativ trocknende organische Bindemittel, ausgewählt aus der Gruppe bestehend aus mindestens einem oxidativ trocknenden mittelöligen und/oder langöligen Alkydharz, insbesondere mindestens einem oxidativ trocknenden langöligen Alkydharz, ein mittleres Molekulargewicht Mn größer oder gleich 1400 g/mol, insbesondere größer oder gleich 1500 g/mol, und/oder ein mittleres Molekulargewicht Mw größer oder gleich 5000 g/mol, insbesondere größer oder gleich 6000 g/mol, und/oder
eine Viskosität, bestimmt bei 20°C und einer Schergeschwindigkeit von 500 s⁻¹, größer oder gleich 5 Pas, insbesondere größer oder gleich 6 Pas und besonders bevorzugt größer oder gleich 7 Pas aufweist.

15. Kit-of-parts Beschichtungssystem enthaltend oder gebildet aus
A) mindestens einer lösemittelhaltigen Farbtonpaste, insbesondere Pigmentpaste, nach einem der vorangehenden Ansprüche und B) mindestens einer Beschichtungsmasse.

16. Beschichtungssystem nach Anspruch 15, **dadurch gekennzeichnet, dass** die Beschichtungsmasse eine lösemittelhaltige Lasur, einen Lösemittellack, eine lösemittelhaltige Farbe eine lösemittelhaltige Bodenbeschichtung oder die Grundrezeptur hierfür ist.

17. Beschichtungssystem nach Anspruch 15 oder 16, **dadurch gekennzeichnet, dass**
x1) die Komponente A) und die Komponente B) jeweils einen VOC-Anteil kleiner 300 g/l, bestimmt nach DIN EN ISO 11890-1 (September 2007), aufweisen oder dass
x2) die Komponente A) einen VOC-Anteil kleiner 300 g/l, und die Komponente B) einen VOC-Anteil größer oder gleich 300 g/l, bestimmt nach DIN EN ISO 11890-1 (September 2007), aufweisen, oder dass
x3) die Komponente A) einen VOC-Anteil größer oder gleich 300 g/l, und die Komponente B) einen VOC-Anteil kleiner 300 g/l, bestimmt nach DIN EN ISO 11890-1 (September 2007), aufweisen,
wobei vorzugsweise für die Ausführungsformen x1), x2) und x3) die VOC-Gehalte und/oder Mengen an den Komponenten A) und B) derart eingestellt sind, dass ein hieraus erhaltenes abgetöntes Anstrichsystem einen VOC-Gehalt kleiner 300 g/l, bestimmt nach DIN EN ISO 11890-1 (September 2007), aufweist.

18. Verwendung der lösemittelhaltigen Farbtonpaste, insbesondere Pigmentpaste, nach einem der Ansprüche 1 bis 14 in Abtönmaschinen, insbesondere Point-of-Sale-Maschinen.

19. Verwendung der lösemittelhaltigen Farbtonpaste, insbesondere Pigmentpaste, nach einem der Ansprüche 1 bis 14 zum Einfärben von lösemittelhaltigen Farben, Lacken und Lasuren.

20. Verwendung der lösemittelhaltigen Farbtonpaste, insbesondere Pigmentpaste, nach einem der Ansprüche 1 bis 14 für die Herstellung abgetönter Anstrichsysteme, insbesondere von lösemittelhaltigen Lasuren, lösemittelhaltigen Lacken, lösemittelhaltigen Farben und/oder lösemittelhaltigen Bodenbeschichtungen.

21. Abgetöntes Anstrichsystem, erhältlich aus dem Beschichtungssystem nach einem der Ansprüche 15 bis 17 durch Vermischen der Farbtonzusammensetzung A) mit der Beschichtungsmasse B).

22. Anstrich, erhältlich durch Auftragen des abgetönten Anstrichsystems nach Anspruch 21 auf eine Substratoberfläche.

23. Verfahren zum Abtönen einer Beschichtungsmasse, umfassend die Schritte
i) Zurverfügungstellung von mindestens einer Farbtonpaste, insbesondere Pigmentpaste, vorzugsweise von mindestens zwei und besonders bevorzugt von mindestens drei Farbtonpasten, insbesondere Pigmentpasten, gemäß einem oder mehreren der Ansprüche 1 bis 14,
ii) Zurverfügungstellung von mindestens einer Beschichtungsmasse nach Anspruch 15, 16 oder 17 und
iii) Vermischen der Farbtonpaste gemäß i) und der Beschichtungsmasse gemäß ii) unter Erhalt eines abgetönten Anstrichsystems, insbesondere nach Anspruch 21.

## Claims

1. A solvent-containing color paste, in particular pigment paste, for tinting coating compositions, including or consisting of
a) at least one organic solvent
b) at least one pigment and/or at least one dye, in particular at least one pigment,
c) at least one oxidatively drying organic binding agent, selected from the group consisting of at least one oxidatively drying middle oil and/or long oil alkyd resin, in particular at least one oxidatively drying long oil alkyd resin,
d) at least one additive, in particular at least one wetting and/or dispersion agent, and
e) at least one antiskinning agent, comprising or consisting of at least one pentanone oxime,
wherein the amount of the at least one antiskinning agent, in particular of the pentanone oxime, is smaller than or equal to 1.0 percent by weight, in particular smaller than or equal to 0.8 percent by weight, relative to the total weight of the color paste, in particular pigment paste, as well as
f) optionally at least one filler and/or
g) optionally at least one pigment synergist.

2. The color paste according to Claim 1, **characterized in that**
pentanone oxime is 2-pentanone-ketoxime, 3-pentanone-ketoxime or a mix of 2-pentanone-ketoxime and 3-pentanone-ketoxime.

3. The color paste according to Claim 1 or 2, **characterized in that** the color paste, in particular pigment paste, is substantially free from methyethyl-ketoxime and in particular has substantially exclusively pentanone oxime, in particular 2-pentanone-ketoxime and/or 3-pentanone-ketoxime, as the antiskinning agent.

4. The color paste according to any one of the preceding claims, **characterized in that** the color paste, in particular pigment paste, includes substantially no further antiskinning agents aside from the ketoximes according to component e).

5. The color paste according to any one of the preceding claims, **characterized in that** it is substantially free from aromatic solvents.

6. The color paste according to any one of the preceding claims, **characterized in that** the solids content thereof lies in the range of 65 to 90 percent by weight, preferably in the range of 70 to 85 percent by weight, relative to the total weight of the color paste, in particular pigment paste.

7. The color paste according to any one of the preceding claims, **characterized in that** it has a viscosity in the range of 200 to 1400 mPas, preferably in the range of 400 to 1200 mPas, determined at a shear rate of 200 s⁻¹ and a temperature of 20 °C.

8. The color paste according to any one of the preceding claims, **characterized in that** the VOC-content thereof is smaller than 300g/l, determined according to DIN EN ISO 11890-1 (September 2007).

9. The color paste according to any one of the preceding claims, **characterized in that** the flashpoint thereof lies above 60 °C, determined according to DIN EN ISO 1523:2002-08.

10. The color paste according to any one of the preceding claims, **characterized in that** the wetting agent is selected from the group consisting of the salts of unsaturated polyamides, the salts of acidic polyesters, in particular of low molecular weight acidic polyesters and/or fatty acid modified polyesters, alkylphenol polyoxyethylene condensates, polyacryl acids, phosphate esters, polyglycoethers, aryl polyglycolethers, polyaryl alkylphenol ethoxylates, fat alcohols, fat alcohol polyglycoethers, alkylethoxylates, alkylether sulfates, alkylether phosphoric acid esters, sulfosuccinate acid esters, alkyl benzolsulfonates, fat alcohol sulfates, alkyl polyglycosides, polysorbates, acryl copolymers, wetting agents with a modified heavy oil-based polymer base, wetting agents with a modified polyurethane base, and any mixtures of the preceding substances.

11. The color paste, in particular pigment paste, according to any one of the preceding claims, including or consisting of
10 to 35 percent in weight, in particular 15 to 30 percent in weight, of component a),
5 to 60 percent in weight, in particular 9 to 56 percent in weight, of component b), in particular of pigment,
10 to 70 percent in weight, in particular 21 to 60 percent in weight, of component c), in particular of the at least one oxidatively drying long oil alkyd resin,
0.5 to 15 percent in weight, in particular 1 to 8 percent in weight, of component d), and
0.50 to 0.95 percent in weight, in particular 0.6 to 0.8 percent in weight, of component e), in particular of 2-pentanone-oxime and/or 3-pentanone-ketoxime, as well as 0 to 20 wt.%, in particular 0.1 to 10 wt.%, and particularly preferably 0.2 to 6 wt.%, of component f), preferably of synthetic barium sulfate,
0 to 5 wt.%, in particular 0.01 to 2 wt.%, and particularly preferably 0.1 to 1.0 wt.%, of component g),
wherein the amount of the components forming the composition are always selected such that their sum adds up to 100.0 wt.%.

12. The color paste according to any one of the preceding claims, **characterized in that** the at least one additive is selected from the group consisting of defoamers, stabilizers, flame retardants, hydrophobization agents, matting agents, in particular precipitated silica, rheological additives, in particular thickeners, surface additives, in particular silicone surface additives, for example polyether modified polymethylalkylsiloxane and/or silicone polyether copolymers, buffer substances, neutralization agents, pH-regulators, UV absorbers, radical scavengers, and mixtures of these compounds, and in particular comprises at least one thickener and/or at least one defoamer.

13. The color paste according to Claim 12, **characterized in that** the thickener is selected from the group consisting of phyllosilicates, in particular organically modified phyllosilicates, pyrogenic silicas, in particular hydrophilically modified pyrogenic silicas, thickeners with a modified urea base, in particular a thickener with polyurethane modified urea, for example a reaction product of toluol-2,4-diisocyanate with xylylendiamine as well as triethylene glycol monobutylether and/or tetraethylene glycol monobutylether, and thixotropic alkyd resins, in particular obtained through partial reacting of polyamides from polymeric fatty acids and polyamines with alkyl resins.

14. The color paste according to any one of the preceding claims, **characterized in that** the at least one oxidatively drying organic binding agent, selected from the group consisting of at least one oxidatively drying medium oil and/or long oil alkyd resin, in particular at least one oxidatively drying long oil alkyd resin, has an average molecular weight Mn of more than or equal to 1400 g/mol, in particular more than or equal to 1500 g/mol, and/or an average molecular weight Mw of more than or equal to 5000 g/mol, in particular more than or equal to 6000 g/mol, and/or
a viscosity, determined at 20 °C and a shear rate of 500 s⁻¹, of higher than or equal to 5 Pas, in particular higher than or equal to 6 Pas, and particularly preferably higher than or equal to 7 Pas.

15. A kit of parts coating system including or formed from A) at least one solvent-containing color paste, in particular pigment paste, according to any one of the preceding claims, and B) at least one coating composition.

16. The coating system according to Claim 15, **characterized in that** the coating composition is a solvent-containing glaze, a solvent lacquer, a solvent-containing dye, a solvent-containing floor coating, or the basic recipe therefor.

17. The coating system according to Claim 15 or 16, **characterized in that**
x1) the component A) and the component B) each have a VOC-content of less than 300g/l, determined according to DIN EN ISO 11890-1 (September 2007), or **in that**
x2) the component A) has a VOC-content of less than 300g/l and the component B) has a VOC-content of more than or equal to 300 g/1, determined according to DIN EN ISO 11890-1 (September 2007), or **in that**
x3) the component A) has a VOC-content of more than or equal to 300g/l and the component B) has a VOC-content of less than 300g/l, determined according to DIN EN ISO 11890-1 (September 2007),
wherein, for the embodiments x1), x2) and x3), the VOC-contents and/or amounts of the components A) and B) are preferably adjusted such that a tinted painting system obtained therefrom has a VOC-content of less than 300 g/l, determined according to DIN EN ISO 11890-1 (September 2007).

18. Use of the solvent-containing color paste, in particular pigment paste, according to any one of Claims 1 to 14, in tinting machines, in particular point of sales machines.

19. Use of the solvent-containing color paste, in particular pigment paste, according to any one of Claims 1 to 14, for coloring solvent-containing dyes, lacquers, and glazes.

20. Use of the solvent-containing color paste, in particular pigment paste, according to any one of Claims 1 to 14, for producing tinted painting systems, in particular solvent-containing glazes, solvent-containing lacquers, solvent-containing dyes, and/or solvent-containing floor coatings.

21. A tinted painting system, obtainable from the coating system according to any one of Claims 15 to 17, through mixing the color composition A) with the coating composition B).

22. A paint, obtainable through applying the tinted painting system according to Claim 21 onto a substrate surface.

23. A method for tinting a coating composition, comprising the steps of
i) providing at least one color paste, in particular pigment paste, preferably at least two and particularly preferably at least three color pastes, in particular pigment pastes, according to one or more of Claims 1 to 14,
ii) providing at least one coating composition according to Claim 15, 16 or 17, and
iii) mixing the color paste according to i) and the coating composition according to ii) to obtain a tinted painting system, in particular according to Claim 21.

## Revendications

1. Pâte de couleur contenant un solvant, notamment pâte de pigment, pour la coloration de matériaux de revêtement, contenant ou constituée par :
a) au moins un solvant organique,
b) au moins un pigment et/ou au moins un colorant, notamment au moins un pigment,
c) au moins un liant organique à séchage oxydatif, choisi dans le groupe constitué par au moins une résine alkyde à huile moyenne et/ou à huile longue à séchage oxydatif, notamment au moins une résine alkyde à huile longue à séchage oxydatif,
d) au moins un additif, notamment au moins un agent mouillant et/ou dispersant, et
e) au moins un agent anti-peau, comprenant ou constitué par au moins un pentanone-oxime,
où la quantité dudit au moins un agent anti-peau, notamment du pentanone-oxime, étant inférieure ou égale à 1,0 pour cent en poids, notamment inférieure ou égale à 0,8 pour cent en poids, par rapport au poids total de la pâte de couleur, notamment de la pâte de pigment, ainsi que
f) éventuellement au moins une charge et/ou
g) éventuellement au moins un synergiste de pigment.

2. Pâte de couleur selon la revendication 1, **caractérisée en ce que** le pentanone-oxime est le 2-pentanone-cétoxime, le 3-pentanone-cétoxime ou un mélange de 2-pentanone-cétoxime et de 3-pentanone-cétoxime.

3. Pâte de couleur selon la revendication 1 ou 2, **caractérisée en ce que** la pâte de couleur, notamment la pâte de pigment, est essentiellement exempte de méthyléthylcétoxime et notamment comprend essentiellement exclusivement du pentanone-oxime, notamment du 2-pentanone-cétoxime et/ou du 3-pentanone-cétoxime, en tant qu'agent anti-peau.

4. Pâte de couleur selon l'une quelconque des revendications précédentes, **caractérisée en ce que**
la pâte de couleur, notamment la pâte de pigment, ne contient essentiellement pas d'agents anti-peau supplémentaires en plus des cétoximes selon le composant e).

5. Pâte de couleur selon l'une quelconque des revendications précédentes, **caractérisée en ce que**
celle-ci est essentiellement exempte de solvants aromatiques.

6. Pâte de couleur selon l'une quelconque des revendications précédentes, **caractérisée en ce que**
sa proportion de solides se situe dans la plage allant de 65 à 90 pour cent en poids, de préférence dans la plage allant de 70 à 85 pour cent en poids, par rapport au poids total de la pâte de couleur, notamment de la pâte de pigment.

7. Pâte de couleur selon l'une quelconque des revendications précédentes, **caractérisée en ce que**
celle-ci présente une viscosité dans la plage allant de 200 à 1 400 mPas, de préférence dans la plage allant de 400 à 1 200 mPas, déterminée à une vitesse de cisaillement de 200 s⁻¹ et une température de 20 °C.

8. Pâte de couleur selon l'une quelconque des revendications précédentes, **caractérisée en ce que**
sa proportion de COV est inférieure à 300 g/l, déterminée selon DIN EN ISO 11890-1 (septembre 2007)

9. Pâte de couleur selon l'une quelconque des revendications précédentes, **caractérisée en ce que**
son point de flamme est supérieur à 60 °C, déterminé selon DIN EN ISO 1523:2002-08.

10. Pâte de couleur selon l'une quelconque des revendications précédentes, **caractérisée en ce que**
l'agent mouillant est choisi dans le groupe constitué par les sels de polyamides insaturés, les sels de polyesters acides, notamment de polyesters acides de faible poids moléculaire et/ou de polyesters modifiés par des acides gras, les condensats d'alkylphénolpolyoxyéthylène, les acides polyacryliques, les esters de phosphate, les éthers de polyglycol, les éthers d'arylpolyglycol, les éthoxylates de polyarylalkylphénol, les alcools gras, les éthers de polyglycol d'alcools gras, les éthoxylates d'alkyle, les éther-sulfates d'alkyle, les esters d'acides alkylétherphosphorique, les esters d'acides sulfosucciniques, les sulfonates d'alkylbenzène, les sulfates d'alcools gras, les alkylpolyglycosides, les polysorbates, les copolymères d'acryle, les agents mouillants à base de polymères d'origine pétrolière modifiés, les agents mouillants à base de polyuréthanes modifiés et les mélanges quelconques des substances précédentes.

11. Pâte de couleur, notamment pâte de pigment, selon l'une quelconque des revendications précédentes, contenant ou constituée par :
10 à 35 pour cent en poids, notamment 15 à 30 pour cent en poids, de composant a), 5 à 60 pour cent en poids, notamment 9 à 56 pour cent en poids, de composant b), notamment de pigment,
10 à 70 pour cent en poids, notamment 21 à 60 pour cent en poids, de composant c), notamment de ladite au moins une résine alkyde à huile longue à séchage oxydatif, 0,5 à 15 pour cent en poids, notamment 1 à 8 pour cent en poids, de composant d), et 0,50 à 0,95 pour cent en poids, notamment 0,6 à 0,8 pour cent en poids, de composant e), notamment de 2-pentanone-oxime et/ou de 3-pentanone-cétoxime, ainsi que 0 à 20 % en poids, notamment 0,1 à 10 % en poids, et de manière particulièrement préférée 0,2 à 6 % en poids, de composant f), de préférence de sulfate de baryum synthétique,
0 à 5 % en poids, notamment 0,01 à 2 % en poids, et de manière particulièrement préférée 0,1 à 1,0 % en poids, de composant g),
où la quantité des composants formant la composition étant toujours choisie de telle sorte que leur somme soit de 100,0 % en poids.

12. Pâte de couleur selon l'une quelconque des revendications précédentes, **caractérisée en ce que**
ledit au moins un additif est choisi dans le groupe constitué par les antimousses, les stabilisateurs, les agents ignifuges, les agents d'hydrophobation, les agents matifiants, notamment les silices précipitées, les additifs de rhéologie, notamment les épaississants, les additifs de surface, notamment les additifs de surface silicones, par exemple le polyméthylalkylsiloxane modifié par un polyéther et/ou les copolymères de silicone-polyéther, les substances tampons, les agents de neutralisation, les régulateurs de pH, les absorbeurs UV, les capteurs de radicaux et les mélanges de ces composés, et notamment au moins un épaississant et/ou au moins un antimousse.

13. Pâte de couleur selon la revendication 12, **caractérisée en ce que** l'épaississant est choisi dans le groupe constitué par les phyllosilicates, notamment les phyllosilicates modifiés organiquement, les silices pyrogénées, notamment les silices pyrogénées modifiées de manière hydrophile, les épaississants à base d'urées modifiées, notamment un épaississant à base d'urée modifiée par un polyuréthane, par exemple un produit de réaction de 2,4-diisocyanate de toluène avec de la xylylène-diamine. ainsi que l'éther monobutylique de triéthylène glycol et/ou de tétraéthylène glycol, et les résines alkydes thixotropes, notamment obtenues par réaction partielle de polyamides d'acides gras polymères et de polyamines avec des résines alkydes.

14. Pâte de couleur selon l'une quelconque des revendications précédentes, **caractérisée en ce que**
ledit au moins un liant organique à séchage oxydatif, choisi dans le groupe constitué par au moins une résine alkyde à huile moyenne et/ou à huile longue à séchage oxydatif, notamment au moins une résine alkyde à huile longue à séchage oxydatif, présente un poids moléculaire moyen Mn supérieur ou égal à 1 400 g/mol, notamment supérieur ou égal à 1 500 g/mol, et/ou un poids moléculaire moyen Mw supérieur ou égal à 5 000 g/mol, notamment supérieur ou égal à 6 000 g/mol, et/ou une viscosité, déterminée à 20 °C et à une vitesse de cisaillement de 500 S⁻¹, supérieure ou égale à 5 Pas, notamment supérieure ou égale à 6 Pas et de manière particulièrement préférée supérieure ou égale à 7 Pas.

15. Système de revêtement en kit contenant ou formé par
A) au moins une pâte de couleur contenant un solvant, notamment une pâte de pigment, selon l'une quelconque des revendications précédentes, et B) au moins un matériau de revêtement.

16. Système de revêtement selon la revendication 15, **caractérisé en ce que** le matériau de revêtement est un glacis contenant un solvant, un vernis à solvant, une teinture contenant un solvant ou un revêtement de sol contenant un solvant, ou la formulation de base pour celui-ci.

17. Système de revêtement selon la revendication 15 ou 16, **caractérisé en ce que**
x1) le composant A) et le composant B) présentent chacun une proportion de COV inférieure à 300 g/l, déterminée selon DIN EN ISO 11890-1 (septembre 2007), ou **en ce que**
x2) le composant A) présente une proportion de COV inférieure à 300 g/l et le composant B) présente une proportion de COV supérieure ou égale à 300 g/l, déterminées selon DIN EN ISO 11890-1 (septembre 2007), ou **en ce que**
x3) le composant A) présente une proportion de COV supérieure ou égale à 300 g/l et le composant B) présente une proportion de COV inférieure à 300 g/l, déterminées selon DIN EN ISO 11890-1 (septembre 2007),
où pour les modes de réalisation x1), x2) et x3), les teneurs en COV et/ou les quantités des composants A) et B) étant de préférence ajustées de telle sorte qu'un système de peinture coloré obtenu à partir de ceux-ci présente une teneur en COV inférieure à 300 g/l, déterminée selon DIN EN ISO 11890-1 (septembre 2007).

18. Utilisation de la pâte de couleur contenant un solvant, notamment de la pâte de pigment, selon l'une quelconque des revendications 1 à 14 dans des machines de coloration, notamment des machines au point de vente.

19. Utilisation de la pâte de couleur contenant un solvant, notamment de la pâte de pigment, selon l'une quelconque des revendications 1 à 14 pour la coloration de teintures, de vernis et de glacis contenant des solvants.

20. Utilisation de la pâte de couleur contenant un solvant, notamment de la pâte de pigment, selon l'une quelconque des revendications 1 à 14 pour la fabrication de systèmes de peinture colorés, notamment de glacis contenant des solvants, de vernis contenant des solvants, de teintures contenant des solvants ou de revêtements de sol contenant des solvants.

21. Système de peinture coloré, pouvant être obtenu à partir du système de revêtement selon l'une quelconque des revendications 15 à 17 par mélange de la composition de couleur A) avec le matériau de revêtement B).

22. Peinture, pouvant être obtenue par application du système de peinture coloré selon la revendication 21 sur une surface de substrat.

23. Procédé de coloration d'un matériau de revêtement, comprenant les étapes suivantes :
i) la mise à disposition d'au moins une pâte de couleur, notamment d'une pâte de pigment, de préférence d'au moins deux et de manière particulièrement préférée d'au moins trois pâtes de couleur, notamment pâtes de pigment, selon une ou plusieurs des revendications 1 à 14,
ii) la mise à disposition d'au moins un matériau de revêtement selon la revendication 15, 16 ou 17, et
iii) le mélange de la pâte de couleur selon i) et du matériau de revêtement selon ii) avec obtention d'un système de peinture coloré, notamment selon la revendication 21.
